# EUROPEAN PATENT APPLICATION

(11) **EP 3 698 951 A1**
(43) Date of publication of application: **26.08.2020**
(21) Application number: 19768478.0
(22) Date of filing: 08.03.2019
(51) Int. Cl.: B29C 70/38, B29C 70/16, B29C 70/54, B64C 1/00, B64F 5/10, B29K 105/08

(54) **COMPOSITE MATERIAL LAMINATION DEVICE AND COMPOSITE MATERIAL LAMINATION METHOD**

(30) Priority: 13.03.2018 JP 2018045834
(71) Applicant: Mitsubishi Heavy Industries, Ltd., Chiyoda-ku Tokyo 100-8332 (JP)
(72) Inventor: SUZUKI Akihito, Tokyo 100-8332 (JP); ISHIDA Kazuki, Tokyo 100-8332 (JP); MUTO Kohei, Tokyo 100-8332 (JP); SHIMIZU Masahiko, Tokyo 100-8332 (JP); OKAWARA Tsuyoshi, Tokyo 100-8332 (JP); MURAKAMI Kenji, Tokyo 100-8332 (JP)
(74) Representative: Henkel & Partner mbB
(86) International application number: PCT/JP2019/009430
(87) International publication number: WO 2019/176793

(57) **Abstract**

A composite material lamination device (10) laminates a composite material (22) on a lamination surface (3), which is an outer surface (1a) of a mold (1) that includes one side surface (1aa) and another side surface (1ac), or an outer surface (2a) of a structure (2) disposed on the outer surface (1a) of the mold (1). The composite material lamination device comprises: a first robot (11) that is disposed on the one side surface (1aa) side of the mold (1) to laminate a portion of the composite material (22) on a portion of the lamination surface (3); and a second robot (12) disposed on the other side surface (1ac) side of the mold (1) to laminate the remaining portion of the composite material (22) on the remaining portion of the lamination surface (3).

## Description

### Technical Field

The present invention relates to a composite material lamination device and a composite material lamination method.

This application claims priority to Japanese Patent Application No. 2018-045834, filed in Japan on March 13, 2018, the contents of which are incorporated herein by reference.

### Background Art

A composite material lamination member in which a composite material is laminated is used as the skin of the main wing or fuselage of an airplane. In a case where the composite material lamination member is formed, a composite material lamination device that automatically laminates the composite material is used (for example, refer to PTL 1).

In a case where the main wing or fuselage of the airplane is manufactured by using the composite material lamination device, a composite material is laminated on an outer surface of a mold, which has a convex shape and has a side surface with a curved or tapered shape, or an outer surface of a laminated body disposed on the mold.

As the composite material lamination device, for example, there is a gantry type composite material lamination device (hereinafter, referred to as a "gantry type lamination device") or a robot arm type composite material lamination device (hereinafter, referred to as a "robot arm type lamination device").

### Citation List

### Patent Literature

[PTL 1] Japanese Patent No. 5550851

### Summary of Invention

### Technical Problem

In a case where a composite material lamination member having a shape along the outer surface of the mold is manufactured by using the gantry type lamination device, it is possible for the head of the gantry type lamination device to easily access a portion corresponding to both side surfaces of the mold.

However, the gantry type lamination device may have a possibility that the size of the device is considerably increased while the foundation work cost or the cost of the device is increased.

On the other hand, the robot arm type lamination device is a smaller device than the gantry type lamination device, and thus, it is possible to suppress an increase in the foundation work cost or the cost.

However, in case of using the robot arm type lamination device installed on one side surface side of the mold, there is a problem in that it is difficult for the robot arm (including a compaction roller rolling on the composite material) to access the other side surface of the mold.

Even in a case where the mold does not have a side surface, in a case where the distance from one side where the robot arm is disposed to the other side is long, similar problems may occur.

An object of the invention is to provide a composite material lamination device and a composite material lamination method which can easily access from one side to the other side of a mold while suppressing an increase in size of the device.

### Solution to Problem

In order to solve the problem, a composite material lamination device according to an aspect of the invention is a composite material lamination device that laminates a composite material on a lamination surface, which is an outer surface of a mold or an outer surface of a structure disposed on the outer surface of the mold, the composite material lamination device including a first robot which is disposed on one side of the mold and laminates a portion of the composite material on a portion of the lamination surface; and a second robot which is disposed on the other side of the mold and laminates a remaining portion of the composite material on a remaining portion of the lamination surface.

According to the invention, the first robot, which is disposed on one side surface side of the mold and laminates a portion of the composite material on a portion of the lamination surface, and the second robot which is disposed on the other side surface side of the mold and laminates the composite material on the remaining portion of the lamination surface are provided, so that the second robot can access the lamination surface disposed on the other side of the mold, which is difficult to access by the first robot, and the first robot can access the lamination surface disposed on the one side of the mold, which is difficult to access by the second robot.

Thus, it is possible to easily access from one side to the other side of a mold while suppressing an increase in size of the device, by using the first and second robots.

In the composite material lamination device according to the aspect of the invention, the first robot may have a first robot arm, a first composite material supply unit that is provided at a distal end portion of the first robot arm and supplies the composite material, and a first compaction roller that presses the composite material against the lamination surface from an outer surface side of the composite material; the first composite material supply unit may include a composite material winding member around which the composite material is wound; and the second robot may have a second robot arm, a second composite material supply unit that is provided at a distal end portion of the second robot arm, receives the composite material winding member from the first composite material supply unit, and supplies the composite material, and a second compaction roller that presses the composite material against the lamination surface from the outer surface side of the composite material.

In this manner, the first composite material supply unit having the composite material winding member, and the second composite material supply unit that receives the composite material winding member from the first composite material supply unit and supplies the composite material from the composite material winding member are provided, so that the composite material is continuously supplied in a direction from the one side to the other side (or from the other side to the one side) of the mold and the composite material can be laminated on the lamination surface.

Further, since the first and second compaction rollers are provided, the entire outer surface of the composite material laminated on the lamination surface can be pressed by using the first and second compaction rollers, and thereby it is possible to press the composite material against the lamination surface with high accuracy.

In the composite material lamination device according to the aspect of the invention, the first composite material supply unit may have a support that supports the composite material winding member in a rotatable state, a guide portion that guides the composite material to be supplied to the lamination surface; a supply roller that is provided between the support and the guide portion, and supplies the composite material to the guide portion, and a cutting unit that is provided between the supply roller and the guide portion, and cuts the composite material.

In this manner, the support, the guide portion, and the supply roller are provided, so that it is possible to supply the composite material from the guide portion to the lamination surface. Further, the cutting unit is provided, so that it is possible to cut the composite material at a desired length.

In the composite material lamination device according to the aspect of the invention, the first robot may have a first robot arm, a first composite material supply unit that is provided at a distal end portion of the first robot arm and supplies the composite material, and a first compaction roller that presses the composite material against the lamination surface from an outer surface side of the composite material; the second robot may have a second robot arm, a second composite material supply unit that is provided at a distal end portion of the second robot arm, and supplies the composite material supplied from the first composite material supply unit, to the lamination surface, and a second compaction roller that presses the composite material against the lamination surface from the outer surface side of the composite material; and the second composite material supply unit may have a composite material hook unit that extends in a width direction of the composite material which has been supplied to an outer side of the first composite material supply unit, and hooks the composite material in a state of being in contact with the composite material in the width direction of the composite material.

In this manner, the composite material hook unit that hooks the composite material in a state of being in contact with the composite material in the width direction of the composite material is provided, so that it is possible to laminate the composite material on the remaining portion of the lamination surface while pulling out the composite material by using the second composite material supply unit, without delivering the composite material winding member from the first composite material supply unit to the second composite material supply unit.

Further, it is possible to simplify the configuration of the second composite material supply unit as compared with a case in which the composite material winding member is delivered from the first composite material supply unit to the second composite material supply unit.

In the composite material lamination device according to the aspect of the invention, the first robot may have a first robot arm having a first connector at a distal end portion, a composite material supply unit that has a second connector and a third connector, and supplies the composite material, the second connector being attachable to or detachable from the first connector and being electrically connected to the first connector in a state of being mounted to the first connector, and the third connector being exposed from the first robot arm in a state where the composite material supply unit is mounted to the first robot arm, and a first compaction roller that presses the composite material against the lamination surface from an outer surface side of the composite material; and the second robot may have a second robot arm having, at a distal end portion, a fourth connector which is attachable to or detachable from the third connector and is electrically connected to the third connector in a state where the third connector is mounted to the fourth connector, and a second compaction roller that presses the composite material against the lamination surface from the outer surface side of the composite material.

In this manner, the first connector, the second connector, the third connector, and the fourth connector, which have the above-described configuration, are provided, so that it is possible to use one composite material supply unit by mounting the composite material supply unit to the first and second robot arms.

Thus, it becomes not necessary to respectively provide the composite material supply units to the first and second robot arms, and thus it is possible to reduce the cost of the composite material lamination device by reducing the number of composite material supply units.

In the composite material lamination device according to the aspect of the invention, the composite material supply unit may have a support that supports the composite material winding member in a rotatable state, a guide portion that guides the composite material to be supplied to the lamination surface; a supply roller that is provided between the support and the guide portion, and supplies the composite material to the guide portion, and a cutting unit that is provided between the supply roller and the guide portion, and cuts the composite material.

In this manner, the support, the guide portion, and the supply roller are provided, so that it is possible to supply the composite material while a direction in which the composite material is supplied is guided by the guide portion. Further, the cutting unit is provided, so that it is possible to cut the composite material at a desired length.

In the composite material lamination device according to the aspect of the invention, the mold may have one side surface disposed on one side of the mold, and the other side surface disposed on the other side of the mold; and the outer surface of the mold may include the one side surface and the other side surface.

In this manner, even in a case where the outer surface of the mold has the one side surface and the other side surface, it is possible to easily access from the one side surface to the other side surface of the mold while suppressing an increase in size of the device.

In order to solve the problem, a composite material lamination method according to another aspect of the invention is a composite material lamination method of laminating a composite material on a lamination surface, which is an outer surface of a mold or an outer surface of a structure disposed on the outer surface of the mold, the composite material lamination method including a first lamination step of laminating a portion of the composite material on the lamination surface positioned on one side of the mold by using a first robot disposed on the one side of the mold; and a second lamination step of laminating a remaining portion of the composite material on a remaining portion of the lamination surface by using a second robot disposed on the other side of the mold.

According to the invention, the first lamination step of laminating a portion of the composite material on the lamination surface positioned on the one side using the first robot that is disposed on the one side of the mold, and the second lamination step of laminating the composite material on the remaining portion of the lamination surface using the second robot that is disposed on the other side of the mold are provided, so that the second robot can access the lamination surface disposed on the other side of the mold, which is difficult to access by the first robot, and the first robot can access the lamination surface disposed on the one side of the mold, which is difficult to access by the second robot.

Thus, it is possible to easily access from one side to the other side of a mold while suppressing an increase in size of the device, by using the first and second robots.

In the composite material lamination method according to the aspect of the invention, in the first lamination step, the composite material may be pressed against a portion of the lamination surface using a first compaction roller, and in the second lamination step, the composite material may be pressed against the remaining portion of the lamination surface using a second compaction roller.

In this manner, in the first lamination step, a predetermined load is applied to the entire outer surface of the composite material disposed on a portion of the lamination surface positioned on the one side by using the first compaction roller, and thus it is possible to press the composite material against a portion of the lamination surface with high accuracy.

Further, in the second lamination step, a predetermined load is applied to the entire outer surface of the composite material disposed on the remaining portion of the lamination surface positioned on the other side by using the second compaction roller, and thus it is possible to press the composite material against the remaining portion of the lamination surface with high accuracy.

In the composite material lamination method according to the aspect of the invention, in the second lamination step, the second robot receives a composite material winding member that the first robot has and around which the composite material is wound, and then supplies the composite material from the composite material winding member.

In this manner, after the second robot receives the composite material winding member that the first robot has and around which the composite material is wound, the composite material is supplied from the composite material winding member, so that the composite material is continuously supplied in a direction from the first robot to the second robot and the composite material can be laminated on the lamination surface.

In the composite material lamination method according to the aspect of the invention, in the second lamination step, the second robot may supply the remaining portion of the composite material to the remaining portion of the lamination surface while pulling out the composite material disposed on an outer side of the first robot.

In this manner, the second robot supplies the composite material to the lamination surface while pulling out the composite material from the first robot, so that it becomes not necessary to deliver the composite material winding member from the first robot to the second robot, and thus it is possible to reduce the size of the composite material lamination device by simplifying the configuration of the second robot.

In the composite material lamination method according to the aspect of the invention, in the first lamination step, the composite material may be supplied from a composite material supply unit in a state where a first connector of the first robot and a second connector of the composite material supply unit are connected, and in the second lamination step, the composite material may be supplied from the composite material supply unit in a state where a third connector constituting the composite material supply unit detached from the first robot and a fourth connector of the second robot are connected.

In this manner, the composite material is laminated on the lamination surface by using the composite material supply unit that can be electrically connected to the first and second robots, so that it is not necessary to provide two composite material supply units, and thus it is possible to reduce the size of the composite material lamination device.

The composite material lamination method according to the aspect of the invention may further include a delivery step of delivering the composite material supply unit from the first robot to the second robot, between the first lamination step and the second lamination step, in which in the delivery step, the composite material supply unit is delivered from the first robot to the second robot by connecting the third connector and the fourth connector in a state where the second connector is connected to the first connector, and then releasing connection between the first connector and the second connector.

The composite material supply unit is delivered from the first robot to the second robot by using such a method, so that it is not necessary to separately provide a mechanism for delivering the composite material supply unit, and thus it is possible to reduce the size of the composite material lamination device.

In the composite material lamination method according to the aspect of the invention, the mold may have a convex shape, and the outer surface of the mold may have one side surface disposed on the one side, and the other side surface disposed on the other side.

In this manner, even in a case where the outer surface of the mold has the one side surface and the other side surface, it is possible to easily access from the one side surface to the other side surface of the mold while suppressing an increase in size of the device.

### Advantageous Effects of Invention

According to the invention, it is possible for a robot arm to easily access from one side to the other side of a mold while suppressing an increase in size of the device.

### Brief Description of Drawings

Fig. 1 is a plan view schematically illustrating a composite material lamination device according to a first embodiment of the invention.
Fig. 2 is a plan view for describing internal configurations of first and second composite material supply units illustrated in Fig. 1.
Fig. 3 is a side view of a mold and a first robot arm illustrated in Fig. 2 seen from A direction.
Fig. 4 is a plan view schematically illustrating a state in which a composite material winding member is delivered from the first robot to a second robot.
Fig. 5 is a side view schematically illustrating a state in which the second robot laminates a composite material on a lamination surface disposed above a flat surface of the mold.
Fig. 6 is a side view schematically illustrating a state in which the second robot has completed lamination of the composite material on a lamination surface disposed above the other side surface of the mold.
Fig. 7 is a flowchart for describing a composite material lamination method according to the first embodiment of the invention.
Fig. 8 is a side view schematically illustrating a composite material lamination device according to a second embodiment of the invention.
Fig. 9 is a side view (part 1) schematically illustrating a composite material lamination device according to a third embodiment of the invention, and is a diagram illustrating a state in which a composite material supply unit is mounted only to a first robot arm.
Fig. 10 is a side view (part 2) schematically illustrating the composite material lamination device according to the third embodiment of the invention, and is a diagram illustrating a state in which the composite material supply unit is mounted to the first and second robot arms.
Fig. 11 is a side view (part 3) schematically illustrating the composite material lamination device according to the third embodiment of the invention, and is a diagram illustrating a state in which the composite material supply unit is mounted only to the second robot arm.
Fig. 12 is a flowchart for describing a composite material lamination method according to the third embodiment of the invention.

### Description of Embodiments

Hereinafter, embodiments in which the invention is applied will be described in detail with reference to the drawings.

### (First Embodiment)

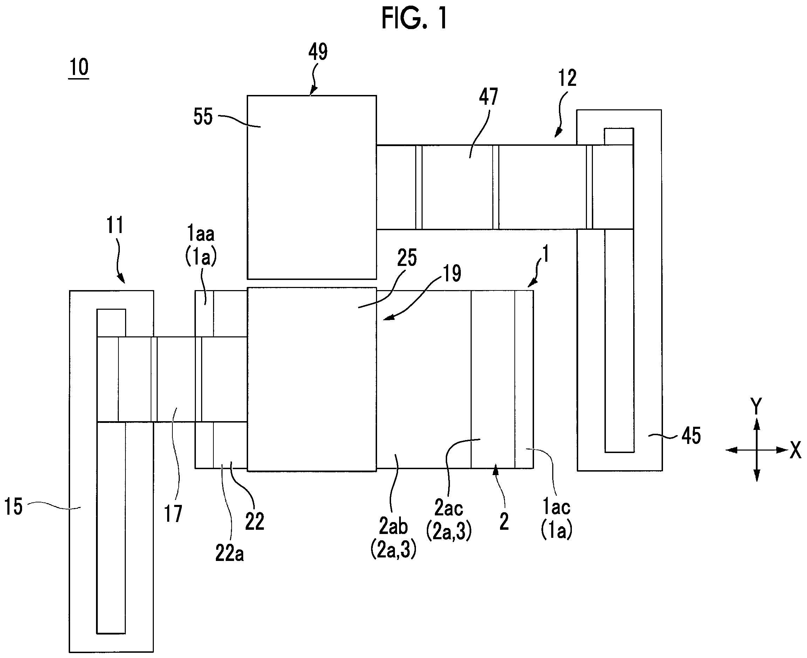

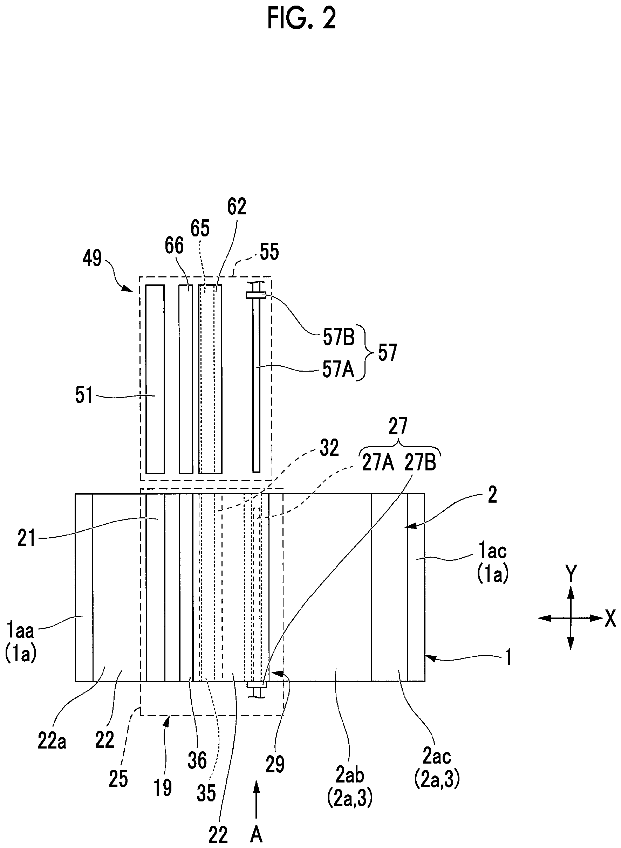

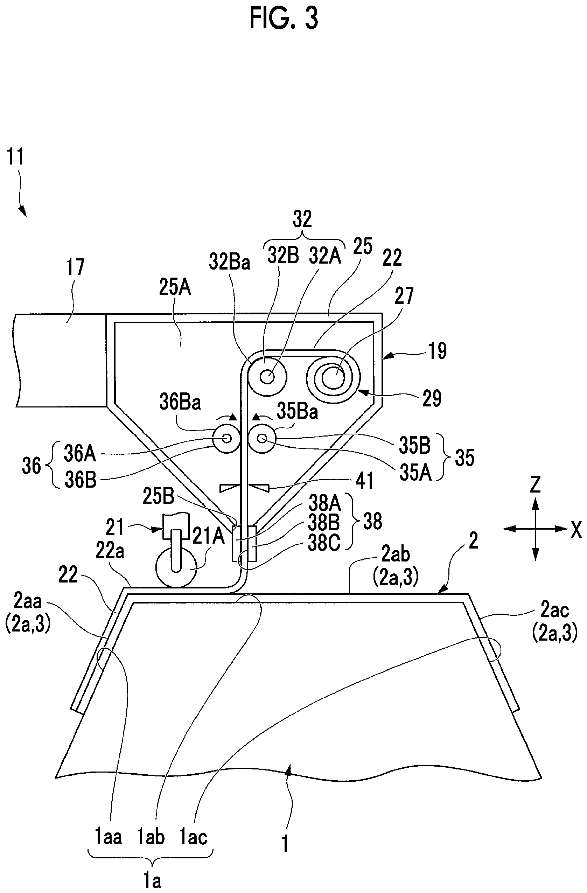

A composite material lamination device 10 of a first embodiment will be described with reference to Figs. 1 to 6. In Figs. 1 to 6, for convenience of description, a mold 1 which is not a component of the composite material lamination device 10 is illustrated. Further, in Fig. 1, illustration of first and second compaction rollers 21 and 51 illustrated in Fig. 2, is omitted. In Fig. 3, illustration of a flange portion 27B illustrated in Fig. 2 is omitted.

In Figs. 1 to 6, an X direction indicates a length direction of a flat surface 1ab constituting an outer surface 1a of the mold 1. In Figs. 1, 2, and 4, a Y direction indicates a width direction of the mold 1 (which is also a width direction of a composite material 22) perpendicular to the X direction. In Figs. 3, 5, and 6, a Z direction indicates a height direction of the mold 1 and the composite material lamination device 10 perpendicular to the X direction and the Y direction.

In Figs. 1 to 6, the same components are denoted by the same reference numerals.

In the first embodiment, for example, a case where the composite material 22 is laminated on an outer surface 2a of a structure 2 (for example, a lamination structure in which a composite material is laminated) disposed on the outer surface 1a of the mold 1 will be described below as an example.

The composite material lamination device 10 has a first robot 11 and a second robot 12.

The first robot 11 is disposed on one side surface 1aa side of the mold 1.

Here, the mold 1 and the structure 2 disposed on the mold 1 will be sequentially described before a specific configuration of the first robot 11 is described.

The mold 1 has a convex shape. The mold 1 has a trapezoidal shape when viewed from side. The mold 1 has the outer surface 1a on which the structure 2 in which the composite material 22 is laminated is disposed. The outer surface 1a has the one side surface 1aa, the flat surface 1ab, and the other side surface 1ac which are disposed in the X direction.

The one side surface 1aa is a surface inclined with respect to the flat surface 1ab.

The flat surface 1ab is disposed between the one side surface 1aa and the other side surface 1ac. In the flat surface 1ab, one end disposed in the X direction is connected to the one side surface 1aa, and the other end disposed in the X direction is connected to the other side surface 1ac.

The other side surface 1ac is a surface inclined with respect to the flat surface 1ab.

In the first embodiment, for example, the case where the one side surface 1aa and the other side surface 1ac are inclined flat surfaces is described as an example, but the shape of the one side surface 1aa and the other side surface 1ac is not limited thereto. For example, the one side surface 1aa and the other side surface 1ac may be curved surfaces which are curved.

Further, the shape of the boundary portions between the flat surface 1ab and the one side surface 1aa and the other side surface 1ac may be a rounded shape. Furthermore, the flat surface 1ab may have a curved shape.

The outer surface 1a of the mold 1 can be appropriately set according to the desired shape of a composite member.

The structure 2 is disposed on the outer surface 1a of the mold 1. The structure 2 is disposed along the one side surface 1aa, the flat surface 1ab, and the other side surface 1ac (outer surface 1a).

The structure 2 has the outer surface 2a disposed on a side opposite to a surface in contact with the outer surface 1a. The outer surface 2a serves as a lamination surface 3 on which the composite material 22 supplied from the composite material lamination device 10 is laminated.

The structure 2 is a member as a portion of the main wing or fuselage of the airplane, and a plurality of composite materials are laminated on the outer surface 2a of the structure 2 so that the main wing or fuselage of the airplane is manufactured.

Next, the configuration of the first robot 11 will be described.

The first robot 11 has a first support mechanism 15, a first robot arm 17, an arm drive unit (not illustrated), a first composite material supply unit 19, the first compaction roller 21, and a roller drive unit (not illustrated).

The first support mechanism 15 is disposed on the one side surface 1aa side of the mold 1. The first support mechanism 15 has a mechanism for supporting a base end portion of the first robot arm 17 and sliding the first robot arm 17 in the Y direction.

The first robot arm 17 is configured to be movable in the X direction, the Y direction, and the Z direction by the arm drive unit (not illustrated). The first robot 11 is configured to be accessible from the one side surface 1aa of the mold 1 to the flat surface 1ab positioned on the one side surface 1aa side of the mold 1.

The first composite material supply unit 19 has a housing 25, a support 27, a composite material winding member 29, a pull-out roller 32, supply rollers 35 and 36, a roller control unit (not illustrated), a guide portion 38, and a cutting unit 41.

The housing 25 is provided on a distal end portion of the first robot arm 17. The housing 25 is a cylindrical member extending in the Y direction, and both ends thereof positioned in the Y direction are open ends. The housing 25 has a shape of which the width in the X direction becomes narrower from the upper end toward the lower end of the housing 25. A housing space 25A is defined in the housing 25.

A groove portion 25B extending in the Y direction is formed on the lower end of the housing 25. The groove portion 25B communicates with the housing space 25A.

The housing 25 having the above-described configuration houses the support 27, the composite material winding member 29, the pull-out roller 32, the supply rollers 35 and 36, the roller drive unit (not illustrated), the guide portion 38, and the cutting unit 41. That is, the support 27, the composite material winding member 29, the pull-out roller 32, the supply rollers 35 and 36, the guide portion 38, and the cutting unit 41 are disposed in the housing space 25A.

In the first embodiment, the case where both ends of the housing 25 positioned in the Y direction are open ends is described as an example, but openable doors may be provided to the both ends of the housing 25 positioned in the Y direction.

The support 27 is disposed on the other side surface 1ac side of the mold 1, in the housing space 25A. The support 27 has a support main body 27A and a flange portion 27B.

The support main body 27A is a rod-shaped member extending in the Y direction, and is supported by the housing 25. In a case where the first robot 11 laminates the composite material 22 on the lamination surface 3, the support main body 27A is inserted into a hollow portion formed in a central portion of the composite material winding member 29.

The support main body 27A supports the composite material winding member 29 in a state where the composite material winding member 29 in which the composite material 22 is wound is rotatable. The diameter of the support main body 27A is configured to be smaller than the diameter of the hollow portion of the composite material winding member 29. The support main body 27A is inserted into the hollow portion of the composite material winding member 29 from the distal end side of the support main body 27A.

The flange portion 27B is provided on a base end portion side of the support main body 27A. The flange portion 27B is a ring-shaped member protruding to an outer side in a radial direction of the support main body 27A. The flange portion 27B is a portion with which one end of the composite material winding member 29 disposed in the Y direction is in contact. The flange portion 27B is a member for regulating the position of the composite material winding member 29 in the Y direction.

The support 27 having the above-described configuration is configured such that the composite material winding member 29 is attachable or detachable.

The composite material winding member 29 is a member obtained by winding the composite material 22 in a roll shape, and the hollow portion extending in the Y direction is formed in the central portion.

The pull-out roller 32 is disposed on an upper portion of the housing space 25A and is disposed closer to the first robot arm 17 than the support 27.

The pull-out roller 32 has a shaft portion 32A and a roller main body 32B. The shaft portion 32A extends in the Y direction. The shaft portion 32A supports the roller main body 32B in a state where the roller main body 32B is rotatable. The shaft portion 32A is supported by the housing 25 in a rotatable state.

The roller main body 32B is a roller having a cylindrical shape extending in the Y direction. The roller main body 32B pulls out the composite material 22, which is wound around the composite material winding member 29, in a direction (X direction) from the support 27 toward the pull-out roller 32. The composite material 22 pulled out from the composite material winding member 29 is in contact with an outer surface 32Ba of the roller main body 32B.

The supply roller 35 is disposed below the pull-out roller 32. The supply roller 35 extends in the Y direction.

The supply roller 35 has a shaft portion 35A and a roller main body 35B. The shaft portion 35A extends in the Y direction. The shaft portion 35A supports the roller main body 35B in a state where the roller main body 35B is rotatable. The shaft portion 35A is supported by the housing 25 in a rotatable state.

The roller main body 35B is a member having a cylindrical shape, and has an outer surface 35Ba in contact with the composite material 22.

The supply roller 36 has a shaft portion 36A and a roller main body 36B. The shaft portion 36A extends in the Y direction. The shaft portion 36A faces the shaft portion 35A in the X direction.

The shaft portion 36A supports the roller main body 36B in a state where the roller main body 36B is rotatable. The shaft portion 36A is supported by the housing 25 in a rotatable state.

The roller main body 36B is a member having a cylindrical shape, and has an outer surface 36Ba in contact with the composite material 22. The roller main body 36B extends in the Y direction. The roller main body 36B faces the roller main body 35B with the composite material 22 interposed therebetween in the X direction.

The supply rollers 35 and 36 having the above-described configuration are rotated in arrow directions illustrated in Fig. 3 by the roller drive unit (not illustrated) to pull out the composite material 22 from the composite material winding member 29, and thereby supply the composite material 22 to the guide portion 38.

The guide portion 38 has a first plate portion 38A, a second plate portion 38B, and a groove 38C.

The first and second plate portions 38A and 38B are provided to the groove portion 25B of the housing 25 so as to face each other in the X direction.

The groove 38C is formed between the first plate portion 38A and the second plate portion 38B. Both ends of the groove 38C in the Y direction are open ends. The width of the groove 38C in the X direction is a size enough to allow the composite material 22 to pass through.

The guide portion 38 having the above-described configuration guides the composite material 22 to the lamination surface 3.

As described above, the both ends of the housing 25 in the Y direction and the both ends of the guide portion 38 in the Y direction are open ends. Thus, the first robot 11 is configured to move the composite material winding member 29, from which a portion of the composite material 22 is laminated on the lamination surface 3, to the outer side of the housing 25 by sliding the configuration of the first composite material supply unit 19 excluding the composite material winding member 29 in the Y direction.

The cutting unit 41 is provided between the supply rollers 35 and 36 and the guide portion 38, and is supported by the housing 25. The cutting unit 41 is disposed to sandwich the composite material 22. The cutting unit 41 cuts the composite material 22 as needed.

The first compaction roller 21 is provided on the outer side of the first composite material supply unit 19. The first compaction roller 21 has a roller main body 21A which is rotatable.

At the time of laminating the composite material 22 on the lamination surface 3, the roller main body 21A is moved while rolling on an outer surface 22a of the composite material 22 in a state of being in contact with the outer surface 22a to apply a predetermined pressure to the composite material 22, and thereby presses the composite material 22 against the lamination surface 3.

The roller control unit (not illustrated) controls the position of the first compaction roller 21 or a load or the like added to the roller main body 21A.

The second robot 12 is disposed on the other side surface 1ac side of the mold 1.

The second robot 12 has a second support mechanism 45, a second robot arm 47, an arm drive unit (not illustrated), a second composite material supply unit 49, the second compaction roller 51, and a roller drive unit (not illustrated).

The second support mechanism 45 is disposed on the other side surface 1ac side of the mold 1. The second support mechanism 45 has a mechanism for supporting a base end portion of the second robot arm 47 and sliding the second robot arm 47 in the Y direction.

The second robot arm 47 is configured to be movable in the X direction, the Y direction, and the Z direction by the arm drive unit (not illustrated). The second robot arm 47 is moved to be at a position where the second robot arm 47 and the second composite material supply unit 49 do not collide with the first robot arm 17 and the first composite material supply unit 19.

For example, in a stage where the first robot 11 laminates the composite material 22 on the lamination surface 3, the second robot arm 47 and the second composite material supply unit 49 are retracted in the Y direction (refer to Fig. 1).

The second robot 12 is configured to be accessible from a position on the flat surface 1ab of the mold 1, where the first robot 11 is accessible, to the other side surface 1ac.

The second composite material supply unit 49 has a housing 55, a support 57, a pull-out roller 62, supply rollers 65 and 66, a roller control unit (not illustrated), a guide portion 68, and a cutting unit 71 forming a cutting space 71A in which the composite material 22 is disposed.

The second composite material supply unit 49 receives the composite material winding member 29 delivered from the first composite material supply unit 19 in the middle of laminating the composite material 22, and laminates the composite material on the remaining lamination surface 3 while supplying the composite material 22.

The housing 55 is provided on a distal end portion of the second robot arm 47. The housing 55 is a cylindrical member extending in the Y direction, and both ends thereof positioned in the Y direction are open ends. The housing 55 has a shape of which the width in the X direction becomes narrower from the upper end toward the lower end of the housing 55. A housing space 55A is defined in the housing 55.

A groove portion 55B extending in the Y direction is formed on the lower end of the housing 55. The groove portion 55B communicates with the housing space 55A.

The housing 55 having the above-described configuration houses the support 57, the pull-out roller 62, the supply rollers 65 and 66, the roller drive unit (not illustrated), the guide portion 68, and the cutting unit 71, in a state where the first robot 11 laminates the composite material 22 (state illustrated in Figs. 1 and 2). That is, in this state, in the housing space 55A, the support 57, the pull-out roller 62, the supply rollers 65 and 66, the roller drive unit (not illustrated), the guide portion 68, and the cutting unit 71 are disposed.

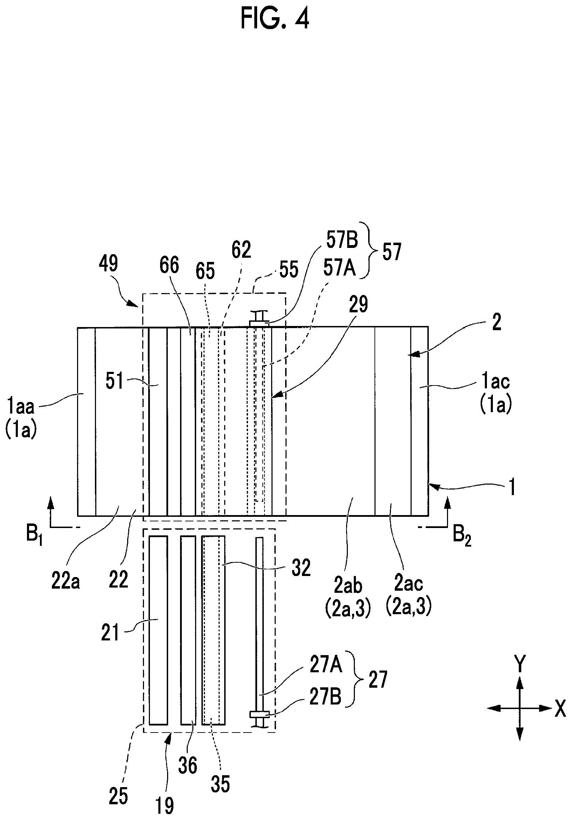

Then, in a case where the second robot 12 laminates the composite material (state illustrated in Figs. 4 to 6), the housing 55 further houses the composite material winding member 29 delivered from the first composite material supply unit 19, in addition to the above-described configuration. That is, in this stage, the composite material winding member 29 is disposed in the housing space 55A.

The support 57 is disposed on the other side surface 1ac side of the mold 1, in the housing space 55A. The support 57 has a support main body 57A and a flange portion 57B.

The support main body 57A is a rod-shaped member extending in the Y direction, and is supported by the housing 55. In a case where the second robot 12 laminates the composite material 22 on the lamination surface 3, the support main body 57A is inserted into the hollow portion formed in the central portion of the composite material winding member 29.

The support main body 57A supports the composite material winding member 29 in a state where the composite material winding member 29 in which the composite material 22 is wound is rotatable. The diameter of the support main body 57A is configured to be smaller than the diameter of the hollow portion of the composite material winding member 29. The diameter of the support main body 57A can have the same size as the diameter of the support main body 27A, for example. The support main body 57A is inserted into the hollow portion of the composite material winding member 29 from the distal end side of the support main body 57A.

The flange portion 57B is provided on a base end portion side of the support main body 57A. The flange portion 57B is a ring-shaped member protruding to an outer side in a radial direction of the support main body 57A. The flange portion 57B is a portion with which one end of the composite material winding member 29 disposed in the Y direction is in contact. The flange portion 57B is a member for regulating the position of the composite material winding member 29 in the Y direction.

The support 57 having the above-described configuration is configured such that the composite material winding member 29 is attachable or detachable.

In a state where the housing 25 and the housing 55 face each other in the Y direction (state illustrated in Figs. 1, 2, and 4), the distal end of the support main body 57A faces the distal end of the support main body 27A. In addition, the distal end of the support main body 57A faces the distal end of the support main body 27A in the Y direction. Further, the axis of the support main body 57A is disposed on an extension line of the axis of the support main body 27A.

The pull-out roller 62 is disposed on an upper portion of the housing space 55A and is disposed closer to the one side surface 1aa side of the mold 1 than the support 57.

The pull-out roller 62 has a shaft portion 62A and a roller main body 62B. The shaft portion 62A extends in the Y direction. The shaft portion 62A supports the roller main body 62B in a state where the roller main body 62B is rotatable. The shaft portion 62A is supported by the housing 55 in a rotatable state.

In a state where the housing 25 and the housing 55 face each other in the Y direction (state illustrated in Figs. 1, 2, and 4), an end of the shaft portion 62A faces an end of the shaft portion 32A. Further, the axis of the shaft portion 62A is disposed on an extension line of the axis of the shaft portion 32A.

The roller main body 62B is a roller having a cylindrical shape extending in the Y direction. The roller main body 62B pulls out the composite material 22, which is wound around the composite material winding member 29, in a direction (X direction) from the support 57 toward the pull-out roller 62. The composite material 22 pulled out from the composite material winding member 29 is in contact with an outer surface 62Ba of the roller main body 62B.

In a state where the housing 25 and the housing 55 face each other in the Y direction (state illustrated in Figs. 1, 2, and 4), an end of the roller main body 62B faces an end of the roller main body 32B. Further, the axis of the roller main body 62B is disposed on an extension line of the axis of the roller main body 32B.

The outer diameter of the roller main body 62B is configured to be equal to the outer diameter of the roller main body 32B.

The supply roller 65 is disposed below the pull-out roller 62. The supply roller 65 extends in the Y direction.

The supply roller 65 has a shaft portion 65A and a roller main body 65B. The shaft portion 65A extends in the Y direction. The shaft portion 65A supports the roller main body 65B in a state where the roller main body 65B is rotatable. The shaft portion 65A is supported by the housing 55 in a rotatable state.

The roller main body 65B is a member having a cylindrical shape, and has an outer surface 65Ba in contact with the composite material 22.

In a state where the housing 25 and the housing 55 face each other in the Y direction (state illustrated in Figs. 1, 2, and 4), an end of the shaft portion 65A faces an end of the shaft portion 35A. Further, the axis of the shaft portion 65A is disposed on an extension line of the axis of the shaft portion 35A.

In addition, in a state where the housing 25 and the housing 55 face each other in the Y direction, an end of the roller main body 65B faces an end of the roller main body 35B. Further, the axis of the roller main body 65B is disposed on an extension line of the axis of the roller main body 35B.

The outer diameter of the roller main body 65B is configured to be equal to the outer diameter of the roller main body 35B.

The supply roller 66 has a shaft portion 66A and a roller main body 66B. The shaft portion 66A extends in the Y direction. The shaft portion 66A faces the shaft portion 65A in the X direction.

The shaft portion 66A supports the roller main body 66B in a state where the roller main body 66B is rotatable. The shaft portion 66A is supported by the housing 55 in a rotatable state.

The roller main body 66B is a member having a cylindrical shape, and has the outer surface 66Ba in contact with the composite material 22. The roller main body 66B extends in the Y direction. The roller main body 66B faces the roller main body 65B with the composite material 22 interposed therebetween in the X direction.

In a state where the housing 25 and the housing 55 face each other in the Y direction (state illustrated in Figs. 1, 2, and 4), an end of the shaft portion 66A faces an end of the shaft portion 36A. Further, the axis of the shaft portion 66A is disposed on an extension line of the axis of the shaft portion 36A.

In addition, in a state where the housing 25 and the housing 55 face each other in the Y direction, an end of the roller main body 66B faces an end of the roller main body 36B. Further, the axis of the roller main body 66B is disposed on an extension line of the axis of the roller main body 36B.

The outer diameter of the roller main body 66B is configured to be equal to the outer diameter of the roller main body 36B.

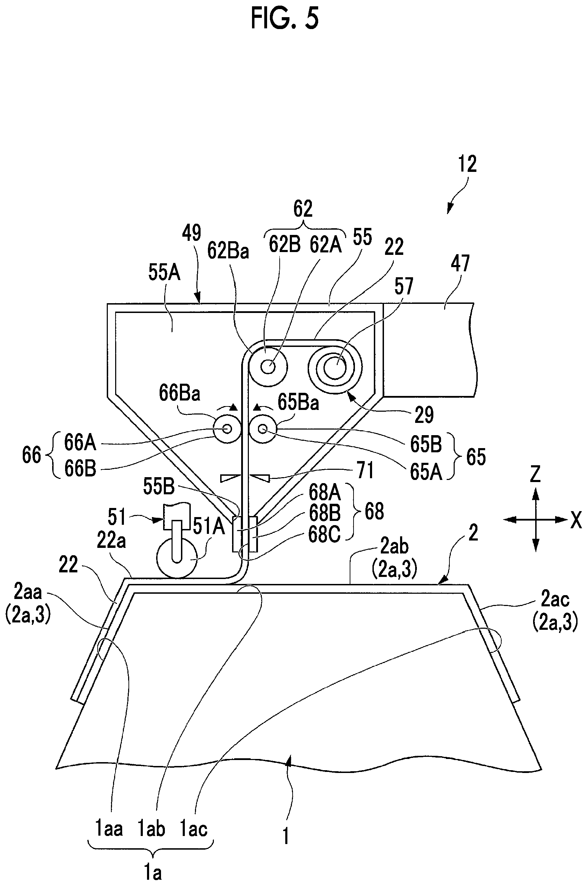

The supply rollers 65 and 66 having the above-described configuration are rotated in arrow directions illustrated in Fig. 5 by the roller drive unit (not illustrated) to pull out the composite material 22 from the composite material winding member 29, and thereby supply the composite material 22 to the guide portion 68.

The guide portion 68 has a first plate portion 68A, a second plate portion 68B, and a groove 68C.

The first and second plate portions 68A and 68B are provided to the groove portion 55B of the housing 55 so as to face each other in the X direction.

The groove 68C is formed between the first plate portion 68A and the second plate portion 68B. Both ends of the groove 68C in the Y direction are open ends. The width of the groove 68C in the X direction is a size enough to allow the composite material 22 to pass through. The guide portion 68 having the above-described configuration guides the composite material 22 to the lamination surface 3.

In a state where the housing 25 and the housing 55 face each other in the Y direction (state illustrated in Figs. 1, 2, and 4), an end surface of the first plate portion 68A faces an end surface of the first plate portion 38A in the Y direction, and an end surface of the second plate portion 68B faces an end surface of the second plate portion 38B in the Y direction.

The groove 68C faces the groove 38C in the Y direction. The width of the groove 68C in the X direction is configured to be equal to the width of the groove 38C.

The cutting unit 71 is provided between the supply rollers 65 and 66 and the guide portion 68, and is supported by the housing 55. The cutting unit 71 is disposed to sandwich the composite material 22. The cutting unit 71 cuts the composite material 22 disposed in the cutting space 71A as needed.

The second compaction roller 51 is provided on the outer side of the second composite material supply unit 49. The second compaction roller 51 has a roller main body 51A which is rotatable.

At the time of laminating the composite material 22 on the lamination surface 3, the roller main body 51A is moved while rolling on the outer surface 22a in a state of adding a predetermined load to the composite material 22 of the composite material 22, to press the composite material 22 against the lamination surface 3.

The roller control unit (not illustrated) controls the position of the second compaction roller 51 or a load or the like added to the roller main body 51A.

Here, a method of delivering the composite material winding member 29 from the first composite material supply unit 19 to the second composite material supply unit 49 will be described with reference to Figs. 2 and 4.

First, the composite material is laminated on the lamination surface 3 up to a position where the first composite material supply unit 19 is accessible, by using the first composite material supply unit 19, and the first composite material supply unit 19 is stopped.

Then, as illustrated in Fig. 2, the second composite material supply unit 49 is moved so that the housing 25 and the housing 55 face each other in the Y direction.

Next, the first composite material supply unit 19 is gradually moved in a direction away from the second composite material supply unit 49, in the Y direction. In this case, the second composite material supply unit 49 is gradually moved in a direction toward the first composite material supply unit 19, in the Y direction.

In this manner, by moving the first and second composite material supply units 19 and 49 in the same direction (Y direction), the support main body 57A is inserted into the hollow portion of the composite material winding member 29 which has been supported by the support main body 27A, and thereby a wound portion of the composite material winding member 29 can be delivered from the first composite material supply unit 19 to the second composite material supply unit 49.

In addition, by moving the first and second composite material supply units 19 and 49 in the same direction (Y direction), the composite material 22 pulled out from the composite material winding member 29 can be delivered from the pull-out roller 32, the supply rollers 35 and 36, the guide portion 38, and the cutting unit 41 to the pull-out roller 62, the supply rollers 65 and 66, the guide portion 68, and the cutting space 71A of the cutting unit 71.

Thus, the second composite material supply unit 49 can laminate the composite material 22 on the lamination surface 3 of the structure 2 disposed on a portion of the flat surface 1ab and the other side surface 1ac which are difficult to access by the first composite material supply unit 19, by using the composite material winding member 29 which has been used by the first composite material supply unit 19.

In a case where the composite material winding member 29 is delivered from the second composite material supply unit 49 to the first composite material supply unit 19, the first and second composite material supply units 19 and 49 are moved in a direction (Y direction) opposite to the direction in which the first and second composite material supply units 19 and 49 are moved at the time of delivering the composite material winding member 29 from the first composite material supply unit 19 to the second composite material supply unit 49.

With the composite material lamination device 10 of the first embodiment, the first robot 11 which is disposed on the one side surface 1aa side of the mold 1 and laminates a portion of the composite material 22 on a portion of the lamination surface 3, and the second robot 12 which is disposed on the other side surface 1ac side of the mold 1 and laminates the composite material 22 on the remaining portion of the lamination surface 3 are provided, so that the second robot 12 can access the lamination surface 3 disposed on the other side surface 1ac side of the mold 1, which is difficult to access by the first robot 11, and the first robot 11 can access the lamination surface 3 disposed on the one side surface 1aa side of the mold 1, which is difficult to access by the second robot 12.

Thus, it is possible to easily access both side surfaces (the one side surface 1aa and the other side surface 1ac) of the mold 1 while suppressing an increase in size of the device, by using the first and second robots 11 and 12.

Further, the first composite material supply unit 19 having the composite material winding member, and the second composite material supply unit 49 that receives the composite material winding member 29 from the first composite material supply unit 19 and supplies the composite material 22 from the composite material winding member 29 are provided, so that the composite material 22 is continuously supplied in a direction from the first robot 11 to the second robot 12 and the composite material 22 can be laminated on the lamination surface 3.

Furthermore, since the first and second compaction rollers 21 and 51 are provided, the entire outer surface 22a of the composite material 22 laminated on the lamination surface 3 can be pressed by using the first and second compaction rollers 21 and 51, and thereby it is possible to press the composite material 22 against the lamination surface 3 with high accuracy.

Here, a composite material lamination method of the first embodiment using the above-described composite material lamination device 10 will be described with reference to Figs. 1 to 7.

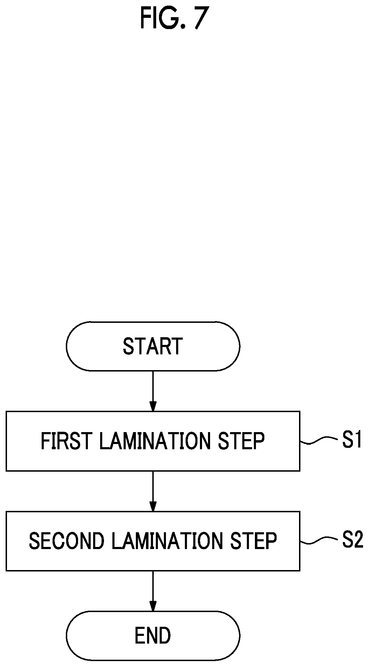

First, in a case where processing illustrated in Fig. 7 is started, a first lamination step is performed in S1.

In the first lamination step, using the first robot 11 disposed on the one side surface 1aa side of the mold 1, a portion of the composite material 22 is laminated on a portion of the lamination surface 3 positioned on the one side surface 1aa side (lamination surface 3 of the structure 2 disposed on the one side surface 1aa and a portion of the flat surface 1ab disposed on the one side surface 1aa side) (refer to Fig. 3).

In this case, a predetermined load is applied to the entire outer surface 22a of the composite material 22 disposed on a portion of the lamination surface 3 positioned on the one side surface 1aa side by using the first compaction roller 21, and thus it is possible to press the composite material 22 against a portion of the lamination surface 3 with high accuracy.

Next, a second lamination step is performed in S2.

In the second lamination step, by the above-described method, the composite material winding member 29 is delivered from the first composite material supply unit 19 to the second composite material supply unit 49.

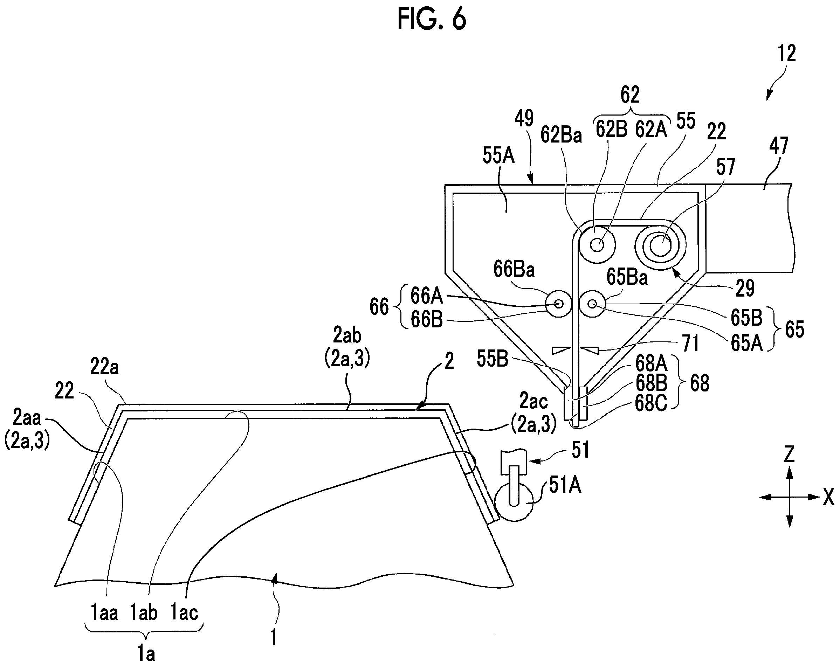

Then, the composite material 22 is supplied from the composite material winding member 29 which has been delivered to the second composite material supply unit 49, the remaining portion of the composite material 22 is laminated on the remaining portion of the lamination surface 3 positioned on the other side surface 1ac side (lamination surface 3 of the structure 2 disposed on the other side surface 1ac and the remaining portion of the flat surface 1ab disposed on the other side surface 1ac side) (refer to Figs. 5 and 6).

In this case, a predetermined load is applied to the entire outer surface 22a of the composite material 22 disposed on the remaining portion of the lamination surface 3 positioned on the other side surface 1ac side by using the second compaction roller 51, and thus it is possible to press the composite material 22 against the remaining portion of the lamination surface 3 with high accuracy.

Further, after the composite material winding member 29 is delivered from the first composite material supply unit 19 to the second composite material supply unit 49, the composite material 22 is supplied from the composite material winding member 29, so that the composite material 22 is continuously supplied in a direction from the first robot 11 to the second robot 12 and the composite material 22 can be laminated on the lamination surface 3.

In a case where S2 is ended, the processing illustrated in Fig. 7 is ended.

With the composite material lamination method of the first embodiment, the first lamination step of laminating a portion of the composite material 22 on the lamination surface 3 positioned on the one side surface 1aa side using the first robot 11 that is disposed on the one side surface 1aa side of the mold 1, and the second lamination step of laminating the composite material 22 on the remaining portion of the lamination surface 3 using the second robot 12 that is disposed on the other side surface 1ac side of the mold 1 are provided, so that the second robot 12 can access the lamination surface 3 disposed on the other side surface 1ac side of the mold 1, which is difficult to access by the first robot 11, and the first robot 11 can access the lamination surface 3 disposed on the one side surface 1aa side of the mold 1, which is difficult to access by the second robot 12.

Thus, it is possible to easily access both side surfaces (the one side surface 1aa and the other side surface 1ac) of the mold 1 while suppressing an increase in size of the device, by using the first and second robots 11 and 12.

In the first embodiment, the case where the composite material 22 is laminated in one layer on the lamination surface 3 is described as an example, but the composite material 22 may be laminated in a plurality of layers on the lamination surface 3 by repeatedly performing S1 and S2 described above while delivering the composite material winding member 29 between the first composite material supply unit 19 and the second composite material supply unit 49.

Further, in a case where the composite material 22 is laminated in a plurality of layers on the lamination surface 3, after the composite material 22 is laminated in a direction from the first robot 11 to the second robot 12, the composite material 22 may be laminated in a direction from the second robot 12 to the first robot 11.

In the first embodiment, as an example of the composite material lamination device, the composite material lamination device 10 in which the support 27 is disposed in the housing 25 is described, but a composite material lamination device in which the support 27 is disposed on an outer side of the housing 25 and which includes a second composite material supply unit not having the support 57 can be used.

In the first embodiment, as an example of the lamination surface 3, the outer surface 2a of the structure 2 is described, but the outer surface 1a of the mold 1 may be used as the lamination surface 3.

### (Second Embodiment)

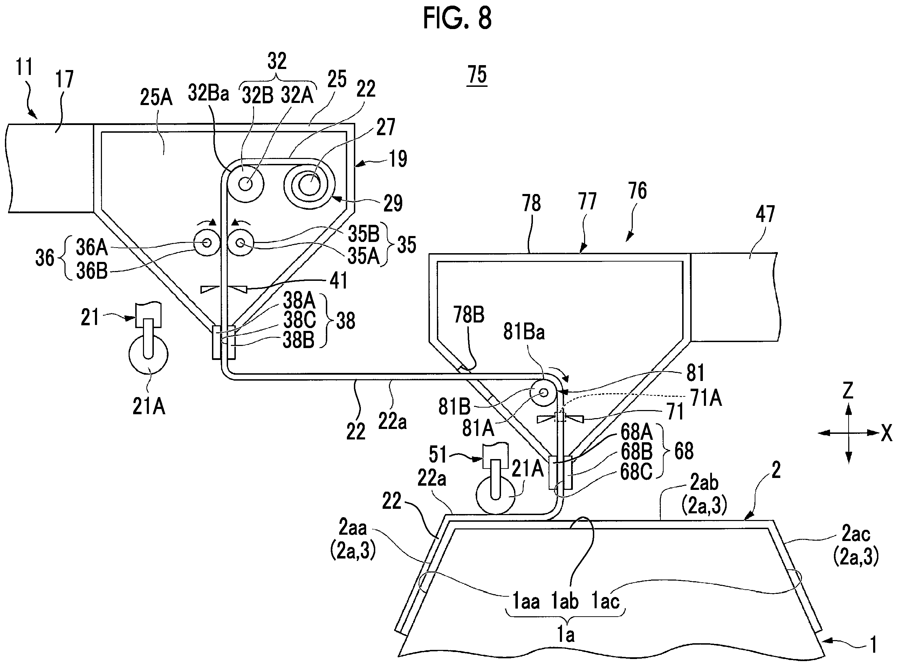

A composite material lamination device 75 of a second embodiment of the invention will be described with reference to Fig. 8. In Fig. 8, the same components as the structure illustrated in Figs. 1 to 6 are denoted by the same reference numerals.

The composite material lamination device 75 has the same configuration as the composite material lamination device 10 except that the composite material lamination device 75 has a second robot 76 instead of the second robot 12 constituting the composite material lamination device 10 of the first embodiment.

The second robot 76 has the same configuration as the second robot 12 except that the second robot 76 has a second composite material supply unit 77 instead of the second composite material supply unit 49 constituting the second robot 12.

The second composite material supply unit 77 has the same configuration as the second composite material supply unit 49 except that the second composite material supply unit 77 has a housing 78, a composite material hook unit 81, and a hook unit drive mechanism (not illustrated) instead of the housing 55, the support 57, and the pull-out roller 62, the supply rollers 65 and 66 constituting the second composite material supply unit 49.

The housing 78 has the same configuration as the housing 55 except that the housing 78 is provided with an opening 78B on a side surface plate positioned on the first robot 11 side, of the housing 55 described in the first embodiment.

The opening 78B serves as a window through which the composite material 22 passes.

The composite material hook unit 81 has a shaft portion 81A and a roller 81B. The shaft portion 81A extends in the width direction of the composite material 22. The roller 81B is provided on the outer side of the shaft portion 81A, and extends in the width direction of the composite material 22. The shape of the roller 81B is a cylindrical shape. The roller 81B is rotated together with the shaft portion 81A.

The roller 81B has an outer surface 81Ba in contact with the composite material 22 which has been supplied to the outer side of the first composite material supply unit 19.

The hook unit drive mechanism (not illustrated) is a mechanism for supporting the composite material hook unit 81 in a state where the composite material hook unit 81 is rotatable, and moving the composite material hook unit 81 in the X direction, the Z direction, and the width direction of the composite material 22 (direction perpendicular to the X direction and the Z direction).

The hook unit drive mechanism moves the composite material hook unit 81 independently from the structure consisting of the housing 78, the guide portion 68, and the cutting unit 71.

Here, a method of guiding the composite material 22, which has been supplied to the outer side of the guide portion 38 of the first composite material supply unit 19, into the housing 78 of the second composite material supply unit 77.

First, in a stage where the first robot 11 has laminated a portion of the composite material 22 on a portion of the lamination surface 3, the first composite material supply unit 19 is retracted in the Z direction away from the mold 1.

Next, the second composite material supply unit 77 is moved such that the second composite material supply unit 77 is positioned below the first composite material supply unit 19 in the Z direction, and then the second composite material supply unit 77 is moved in the X direction. In this case, the second composite material supply unit 77 is moved such that the composite material hook unit 81 is positioned closer to the first robot 11 than the outer surface 22a of the composite material 22 when viewed from the width direction of the composite material 22.

In this stage, the housing 78, the guide portion 68, the cutting unit 71, and the composite material hook unit 81 are positioned on one side in the width direction of the composite material 22.

Next, the position of the structure consisting of the housing 78, the guide portion 68, and the cutting unit 71 is unchanged, and the composite material hook unit 81 is moved to the other side in the width direction of the composite material 22 such that the outer surface 81Ba of the roller 81B of the composite material hook unit 81 faces the outer surface 22a of the composite material 22 in the X direction.

Next, the housing 78, the guide portion 68, the cutting unit 71, and the composite material hook unit 81 are moved in a direction from the one side surface 1aa to the other side surface 1ac of the mold 1.

In this stage, the outer surface 81Ba of the roller 81B is in contact with the outer surface 22a of the composite material 22, and a portion of the composite material 22 is moved in the direction from the one side surface 1aa to the other side surface 1ac of the mold 1.

At this point, only the composite material hook unit 81 is disposed above the mold 1, and the structure consisting of the housing 78, the guide portion 68, and the cutting unit 71 is disposed on one side in the width direction of the composite material 22.

Further, the housing 78, the guide portion 68, the cutting unit 71, and the composite material hook unit 81 are moved such that the composite material 22 positioned below the composite material hook unit 81 faces the groove 68C and the cutting space 71A when viewed from the width direction of the composite material 22.

Then, the structure consisting of the housing 78, the guide portion 68, and the cutting unit 71 is moved to the other side in the width direction of the composite material 22, so that the composite material 22 and the composite material hook unit 81 are housed in the housing 78 and the composite material 22 is disposed in the cutting space 71A and the groove 68C (refer to Fig. 8).

In this manner, the composite material 22 which has been supplied to the outer side of the guide portion 38 is delivered to the second composite material supply unit 77.

With the composite material lamination device 75 of the second embodiment, the composite material hook unit 81 that extends in the width direction of the composite material 22, which has been supplied to the outer side of the first composite material supply unit 19, and hooks the composite material 22 in a state of being in contact with the composite material 22 in the width direction of the composite material 22 is provided, so that it is possible to laminate the composite material 22 on the remaining portion of the lamination surface 3 while pulling out the composite material 22 by using the second composite material supply unit 77, without delivering the composite material winding member 29 from the first composite material supply unit 19 to the second composite material supply unit 77.

Further, it is possible to simplify the configuration of the second composite material supply unit 77 as compared with the case in which the composite material winding member 29 is delivered from the first composite material supply unit 19 to the second composite material supply unit 49 described in the first embodiment.

In the second embodiment, as an example of the second composite material supply unit, the second composite material supply unit 77 is described, but a second composite material supply unit having an adsorption mechanism capable of adsorbing the composite material 22 may be used instead of the second composite material supply unit 77.

Further, in the second embodiment, the case where the first robot 11 is disposed on the one side surface 1aa side of the mold 1 and the second robot 76 is disposed on the other side surface 1ac side of the mold 1 is described as an example, but the second robot 76 may be disposed on the one side surface 1aa side and the first robot 11 may be disposed on the other side surface 1ac side.

Next, a composite material lamination method of the second embodiment using the above-described composite material lamination device 75 will be described.

The composite material lamination method of the second embodiment can be performed by the same method as the composite material lamination method of the first embodiment except that, instead of the processing of delivering the composite material winding member 29 from the first composite material supply unit 19 to the second composite material supply unit 49, which is performed in the second lamination step (S2) illustrated in Fig. 7, the processing of disposing the composite material 22 in the cutting space 71A and the groove 68C of the guide portion 68 is performed and the remaining portion of the composite material 22 is laminated on the remaining portion of the lamination surface 3 while the composite material 22 is pulled out from the composite material winding member 29 by the composite material hook unit 81.

With the composite material lamination method of the second embodiment, the second robot 76 supplies the composite material 22 to the lamination surface 3 while pulling out the composite material 22 from the first robot 11, so that it becomes not necessary to deliver the composite material winding member 29 from the first robot 11 to the second robot. Thus, it becomes possible to simplify the configuration of the second robot 76, and thus it is possible to reduce the size of the composite material lamination device 75.

### (Third Embodiment)

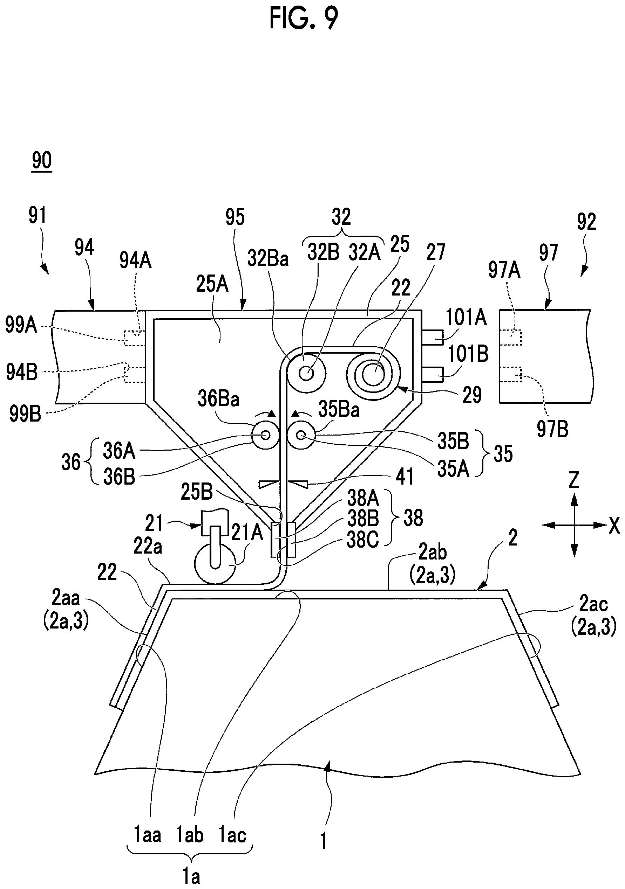

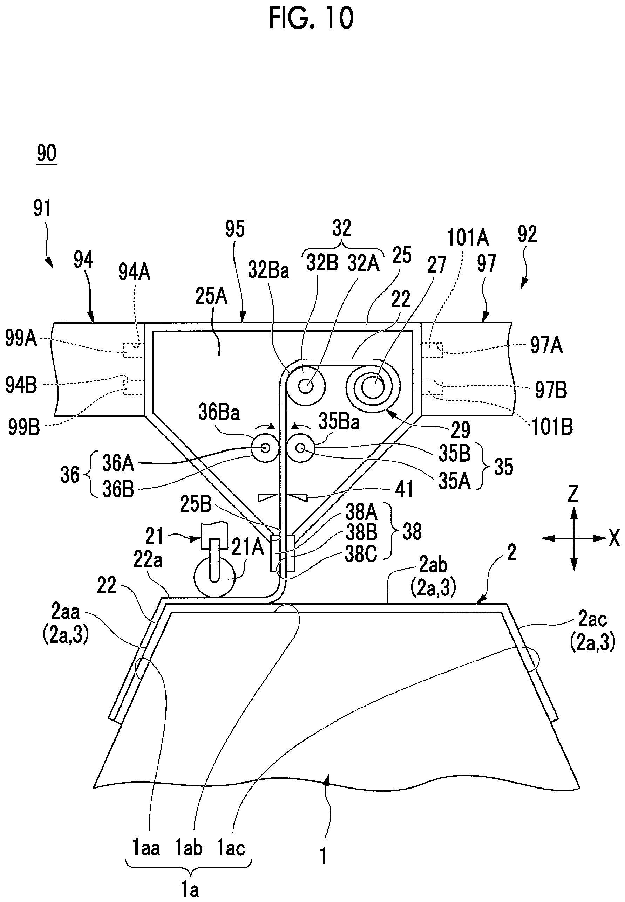

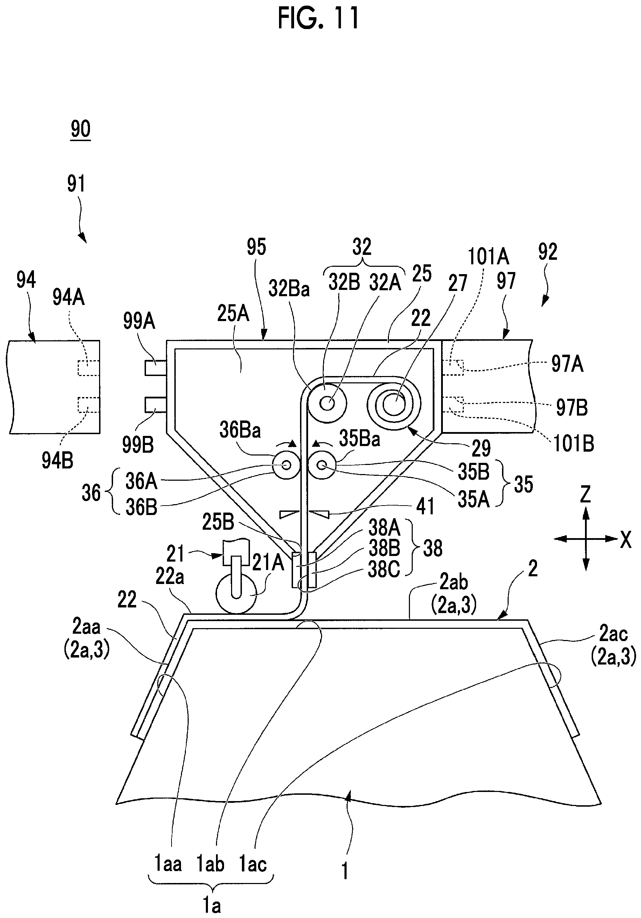

A composite material lamination device 90 of a third embodiment of the invention will be described with reference to Figs. 9 to 11. In Fig. 9, the same components as the structure illustrated in Fig. 3 are denoted by the same reference numerals. Further, in Figs. 10 and 11, the same components as the structure illustrated in Fig. 9 are denoted by the same reference numerals.

The composite material lamination device 90 has a first robot 91 and a second robot 92.

The first robot 91 has the same configuration as the first robot 11 except that the first robot 91 has a first robot arm 94 and a composite material supply unit 95 instead of the first robot arm 17 and the first composite material supply unit 19 constituting the first robot 11 described in the first embodiment.

The first robot arm 94 has the same configuration as the first robot arm 17 except that the first robot arm 94 has first connectors 94A and 94B at the distal end portion.

The first connector 94A is a connector for power supply. The first connector 94B is a connector for communication. The first connectors 94A and 94B are concave connectors.

The composite material supply unit 95 has the same configuration as the first composite material supply unit 19 except that the composite material supply unit 95 further has second connectors 99A and 99B and third connectors 101A and 101B in addition to the components of the first composite material supply unit 19 described in the first embodiment.

The second connectors 99A and 99B are provided to protrude from a side wall of the housing 25, which is positioned on the first robot 91 side, in a direction toward the first robot 91.

The second connector 99A is a connector for power supply, and is configured to be attachable to or detachable from the first connector 94A.

The second connector 99B is a connector for communication, and is configured to be attachable to or detachable from the first connector 94B.

The third connectors 101A and 101B are provided to protrude from a side wall of the housing 25, which is positioned on the second robot 92 side, in a direction toward the second robot 92.

The third connector 101A is a connector for power supply. The third connector 101B is a connector for communication.

A second robot arm 97 has the same configuration as the second robot arm 47 except that the second robot arm 97 has fourth connectors 97A and 97B at the distal end portion.

The fourth connector 97A is a connector for power supply, and is configured to be attachable to or detachable from the third connector 101A.

The fourth connector 97B is a connector for communication, and is configured to be attachable to or detachable from the third connector 101B.

The composite material supply unit 95 described above is configured to be attachable to or detachable from the first and second robot arms 94 and 97.

As illustrated in Fig. 9, in a state where the second connectors 99A and 99B of the composite material supply unit 95 are mounted to the first connectors 94A and 94B of the first robot arm 94 and the second robot arm 97 is not mounted to the composite material supply unit 95, the third connectors 101A and 101B are exposed from the first robot arm 94.

Further, as illustrated in Fig. 11, in a state where the third connectors 101A and 101B of the composite material supply unit 95 are mounted to the fourth connectors 97A and 97B of the second robot arm 97 and the first robot arm 94 is not mounted to the composite material supply unit 95, the second connectors 99A and 99B are exposed from the second robot arm 97.

With the composite material lamination device 90 of the third embodiment, the first connectors 94A and 94B, the second connectors 99A and 99B, the third connectors 101A and 101B, and the fourth connectors 97A and 97B, which have the above-described configuration, are provided, so that it is possible to use one composite material supply unit 95 by mounting the composite material supply unit 95 to the first and second robot arms 94 and 97.

Thus, it becomes not necessary to respectively provide the composite material supply units to the first and second robot arms 94 and 97, and thus it is possible to reduce the number of composite material supply units. Thus, it is possible to reduce the size of the composite material lamination device 90.

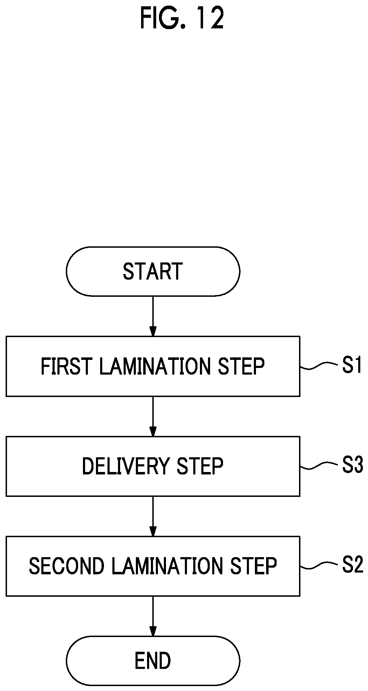

Next, a composite material lamination method of the third embodiment using the above-described composite material lamination device 90 will be described with reference to Fig. 12. In Fig. 12, the same steps as those in the flowchart illustrated in Fig. 7 are denoted by the same reference numerals.

The composite material lamination method of the third embodiment is the same as the composite material lamination method of the first embodiment except that S3 (delivery step) is provided between S1 (first lamination step) and S2 (second lamination step).

In S3, processing of delivering the composite material supply unit 95 from the first robot arm 94 to the second robot arm 97 is performed (delivery step).

As illustrated in Figs. 9 to 11, in the delivery step, the composite material supply unit 95 is delivered from the first robot arm 94 to the second robot arm 97 by connecting the third connectors 101A and 101B and the fourth connectors 97A and 97B in a state where the second connectors 99A and 99B are connected to the first connectors 94A and 94B, and then releasing the connection between the first connectors 94A and 94B and the second connectors 99A and 99B.

With the composite material lamination method of the third embodiment, the composite material supply unit 95 is delivered from the first robot arm 94 to the second robot arm 97 by using the above-described method, so that it is not necessary to separately provide a mechanism for delivering the composite material supply unit, and thereby it is possible to reduce the cost of the composite material lamination device 90.

The preferred embodiments of the invention have been described above, but the invention is not limited to a specific embodiment, and can be variously modified and changed within the scope of the present invention described in the claims.

For example, in the first to third embodiments, the case where the support 27 and the composite material winding member 29 are housed in the housing 25 is described as an example, but the support 27 and the composite material winding member 29 may be disposed on the outer side of the housing 25. The invention is applicable to the composite material lamination device having such a configuration.

Further, in the first to third embodiments, as an example of the mold, the mold 1 having the one side surface 1aa and the other side surface 1ac is described, but the invention is applicable to a mold which does not have the one side surface 1aa and the other side surface 1ac and has the flat surface 1ab that is long in the X direction.

### Industrial Applicability

The present invention is applicable to a composite material lamination device and a composite material lamination method.

### Reference Signs List

1: mold
1a, 2a, 22a, 32Ba, 35Ba, 36Ba, 62Ba, 65Ba, 66Ba, 81Ba: outer surface
1aa: one side surface
1ab: flat surface
1ac: the other side surface
2: structure
3: lamination surface
10, 75, 90: composite material lamination device
11, 91: first robot
12, 76, 92: second robot
15: first support mechanism
17, 94: first robot arm
19: first composite material supply unit
21: first compaction roller
21A, 32B, 35B, 36B, 51A, 62B, 65B, 66B: roller main body
22: composite material
25, 55, 78: housing
25A, 55A: housing space
25B, 55B: groove portion
27, 57: support
27A, 57A: support main body
27B, 57B: flange portion
29: composite material winding member
32, 62: pull-out roller
32A, 35A, 36A, 62A, 65A, 66A, 81A: shaft portion
35, 36, 65, 66: supply roller
38, 68: guide portion
38A, 68A: first plate portion
38B, 68B: second plate portion
38C: 68C: groove
41, 71: cutting unit
45: second support mechanism
47, 97: second robot arm
49, 77: second composite material supply unit
51: second compaction roller
71A: cutting space
78B: opening
81: composite material hook unit
81B: roller
94A, 94B: first connector
95: composite material supply unit
97A, 97B: fourth connector
99A, 99B: second connector
101A, 101B: third connector

## Claims

1. A composite material lamination device that laminates a composite material on a lamination surface, which is an outer surface of a mold or an outer surface of a structure disposed on the outer surface of the mold, the composite material lamination device comprising:
a first robot which is disposed on one side of the mold and laminates a portion of the composite material on a portion of the lamination surface; and
a second robot which is disposed on the other side of the mold and laminates a remaining portion of the composite material on a remaining portion of the lamination surface.

2. The composite material lamination device according to claim 1.,
wherein the first robot has
a first robot arm,
a first composite material supply unit that is provided at a distal end portion of the first robot arm and supplies the composite material, and
a first compaction roller that presses the composite material against the lamination surface from an outer surface side of the composite material,
the first composite material supply unit includes a composite material winding member on which the composite material is wound, and
the second robot has
a second robot arm,
a second composite material supply unit that is provided at a distal end portion of the second robot arm, receives the composite material winding member from the first composite material supply unit, and supplies the composite material, and
a second compaction roller that presses the composite material against the lamination surface from the outer surface side of the composite material.

3. The composite material lamination device according to claim 2,
wherein the first composite material supply unit has
a support that supports the composite material winding member in a rotatable state,
a guide portion that guides the composite material to be supplied to the lamination surface,
a supply roller that is provided between the support and the guide portion, and supplies the composite material to the guide portion, and
a cutting unit that is provided between the supply roller and the guide portion, and cuts the composite material.

4. The composite material lamination device according to claim 1,
wherein the first robot has
a first robot arm,
a first composite material supply unit that is provided at a distal end portion of the first robot arm and supplies the composite material, and
a first compaction roller that presses the composite material against the lamination surface from an outer surface side of the composite material,
the second robot has
a second robot arm,
a second composite material supply unit that is provided at a distal end portion of the second robot arm, and supplies the composite material supplied from the first composite material supply unit, to the lamination surface, and
a second compaction roller that presses the composite material against the lamination surface from the outer surface side of the composite material, and
the second composite material supply unit has a composite material hook unit that extends in a width direction of the composite material which has been supplied to an outer side of the first composite material supply unit, and hooks the composite material in a state of being in contact with the composite material in the width direction of the composite material.

5. The composite material lamination device according to claim 1,
wherein the first robot has
a first robot arm having a first connector at a distal end portion,
a composite material supply unit that has a second connector and a third connector, and supplies the composite material, the second connector being attachable to or detachable from the first connector and being electrically connected to the first connector in a state of being mounted to the first connector, and the third connector being exposed from the first robot arm in a state where the composite material supply unit is mounted to the first robot arm, and
a first compaction roller that presses the composite material against the lamination surface from an outer surface side of the composite material, and
the second robot has
a second robot arm having, at a distal end portion, a fourth connector which is attachable to or detachable from the third connector and is electrically connected to the third connector in a state where the third connector is mounted to the fourth connector, and
a second compaction roller that presses the composite material against the lamination surface from the outer surface side of the composite material.

6. The composite material lamination device according to claim 5,
wherein the composite material supply unit has
a support that supports a composite material winding member, around which the composite material is wound, in a rotatable state,
a guide portion that guides the composite material to be supplied to the lamination surface,
a supply roller that is provided between the support and the guide portion, and supplies the composite material to the guide portion, and
a cutting unit that is provided between the supply roller and the guide portion, and cuts the composite material.

7. The composite material lamination device according to any one of claims 1 to 6,
wherein the mold has
one side surface disposed on one side of the mold, and
the other side surface disposed on the other side of the mold, and
the outer surface of the mold includes the one side surface and the other side surface.

8. A composite material lamination method of laminating a composite material on a lamination surface, which is an outer surface of a mold or an outer surface of a structure disposed on the outer surface of the mold, the composite material lamination method comprising:
a first lamination step of laminating a portion of the composite material on the lamination surface positioned on one side of the mold by using a first robot disposed on the one side of the mold; and
a second lamination step of laminating a remaining portion of the composite material on a remaining portion of the lamination surface by using a second robot disposed on the other side of the mold.

9. The composite material lamination method according to claim 8,
wherein in the first lamination step, the composite material is pressed against a portion of the lamination surface using a first compaction roller, and
in the second lamination step, the composite material is pressed against the remaining portion of the lamination surface using a second compaction roller.

10. The composite material lamination method according to claim 8 or 9,
wherein in the second lamination step, the second robot receives a composite material winding member that the first robot has and around which the composite material is wound, and then supplies the composite material from the composite material winding member.

11. The composite material lamination method according to claim 8 or 9,
wherein in the second lamination step, the second robot supplies the remaining portion of the composite material to the remaining portion of the lamination surface while pulling out the composite material disposed on an outer side of the first robot.

12. The composite material lamination method according to claim 8 or 9,
wherein in the first lamination step, the composite material is supplied from a composite material supply unit in a state where a first connector of the first robot and a second connector of the composite material supply unit are connected, and
in the second lamination step, the composite material is supplied from the composite material supply unit in a state where a third connector constituting the composite material supply unit detached from the first robot and a fourth connector of the second robot are connected.

13. The composite material lamination method according to claim 12, further comprising:
a delivery step of delivering the composite material supply unit from the first robot to the second robot, between the first lamination step and the second lamination step,
wherein in the delivery step, the composite material supply unit is delivered from the first robot to the second robot by connecting the third connector and the fourth connector in a state where the second connector is connected to the first connector, and then releasing connection between the first connector and the second connector.

14. The composite material lamination method according to any one of claims 8 to 13,
wherein the mold has a convex shape, and
the outer surface of the mold has one side surface disposed on the one side, and the other side surface disposed on the other side.
